# EUROPEAN PATENT SPECIFICATION

(11) **EP 1 129 622 B1**
(45) Date of publication and mention of the grant of the patent: **02.06.2004**
(21) Application number: 01200765.4
(22) Date of filing: 01.03.2001
(51) Int. Cl.: A22C 29/04, A22C 25/02, A23L 1/333

(54) **Method and apparatus for cleaning mussel shells**
Verfahren und Vorrichtung zur Reinigung von Muschelschalen
Procédé et dispositif pout nettoyer des coquilles de moules

(30) Priority: 02.03.2000 NL 1014547
(43) Date of publication of application: 05.09.2001
(73) Proprietor: Mosselhandel Triton B.V., 4401 NT Yerseke (NL)
(72) Inventor: De Koeyer, Cornelis, 4341 LE Arnemuiden (NL)
(74) Representative: Prins, Adrianus Willem, Mr. Ir.

(56) References cited:
- DE-A- 3 425 884
- FR-A- 2 720 601
- US-A- 4 601 080
- US-A- 4 939 814
- US-A- 5 261 854
- PATENT ABSTRACTS OF JAPAN vol. 1999, no. 12, 29 October 1999 (1999-10-29) -& JP 11 178502 A (TAIYO SEISAKUSHO:KK), 6 July 1999 (1999-07-06)
- PATENT ABSTRACTS OF JAPAN vol. 015, no. 456 (C-0886), 20 November 1991 (1991-11-20) -& JP 03 195452 A (ISHINOMAKI SUISAN TEKKO:KK), 27 August 1991 (1991-08-27)
- PATENT ABSTRACTS OF JAPAN vol. 009, no. 184 (C-294), 30 July 1985 (1985-07-30) -& JP 60 054663 A (KINJI NAGAMATSU), 29 March 1985 (1985-03-29)

## Description

The present invention relates to a method for cleaning mussel shells, in particular for removing "barnacles", which are growths of living organisms, and/or a "cement or grey layer" practically always present thereon. Without this cleaning, the mussels are often unsuitable for direct consumption.

From US patent application No. 5,261,854 an apparatus is known for eviscerating scallops. This apparatus contains a drum shaped structure with sidewalls that are made up of rollers. The rollers have roughened surfaces to grip viscera and pull them to a position where they are pinched between adjacent rollers. Adjacent rollers rotate in mutually opposite direction. When viscera are pinched between a pair of adjacent roller the rotation pulls the viscera loose from the scallops. This apparatus is not concerned with cleaning small polluting elements such as barnacles from shells.

According to the invention, therefore, a cleaning of mussel shells takes place, which comprises subjecting the mussels to an abrasive or brushing treatment in a rotating drum structure set up by brush-shaped elements likewise rotating about their axes.

In particular, the mussels to be cleaned are rinsed in and through the drum structure in an upwardly inclined direction under water pressure. The desired throughput speed of the mussels can be obtained by the adjustment, on the basis of the size and the degree of fouling of the mussel supplies, of the inclined position of the drum structure and the amount of water used for rinsing the mussels in and through the drum structure. The inclined position can take place at an angle of 3 to 12°, but preferably of 6 to 8°.

To obtain a desired abrasive or brushing effect, the rotational speed of the brush-shaped elements is in the interval of 300 to 400 revolutions per minute, while the rotational speed of the drum structure is in the interval of 30 to 40 revolutions per minute.

The invention not only relates to a method, but also to an apparatus for cleaning mussel shells. Such an apparatus comprises a plurality of mutually parallel brush-shaped elements which together set up a drum structure, and which are journalled at or near their ends in flange-shaped elements, while, furthermore, first driving means are provided for mutually synchronously driving the brush-shaped elements, as well as second driving means for driving the whole drum structure with flange-shaped elements.

Preferably, the first driving means are formed by a first transmission element to enable a mutually synchronous movement of the brush-shaped elements and by a first motor with a controllable speed and a second transmission element for driving one or more brush-shaped elements. The second driving means can be formed by a second motor with a controllable speed engaging one of the flange-shaped elements. Of course, all kinds of known types of motors and speed controls are possible.

It is favourable if the brush-shaped elements are formed by shafts having substantially radially directed bristles, while the ends of the parts of two adjacent brush-shaped elements directed towards each other touch or practically touch each other. This prevents mussels from falling between the brush-shaped elements, while yet a proper abrasive or brushing effect can be obtained.

In a concrete embodiment, one of the flange-shaped elements is provided with an inlet opening, and the brush-shaped elements extend from this flange-shaped element to a distance from the other flange-shaped element, while the outlet openings are formed by the spaces between the shafts of the brush-shaped elements near the other flange-shaped element. In order to be able to collect and discharge the cleaned mussels, a conveying element is provided under the outlet openings.

It is further favourable if through the free space in the drum structure a water supply pipe is arranged with openings for spraying mussels present in the drum structure. Sand, grit, and remainders of barnacles are thus easily rinsed off.

Furthermore, lifting means are provided for placing the drum structure into the operating position at such an angle that the inlet opening forms the lowermost part. In order yet to be able to pass the mussels into and through the drum structure, a chute passing through the inlet opening is provided, via which chute mussels can be rinsed in and through the drum structure under water pressure.

The invention will now be explained in more detail with reference to the accompanying drawings, in which:
Fig. 1 is a schematic view of a part of the apparatus according to the invention in longitudinal cross-section;
Fig. 2 is a cross-sectional view thereof taken along lines I-I in Fig. 1;

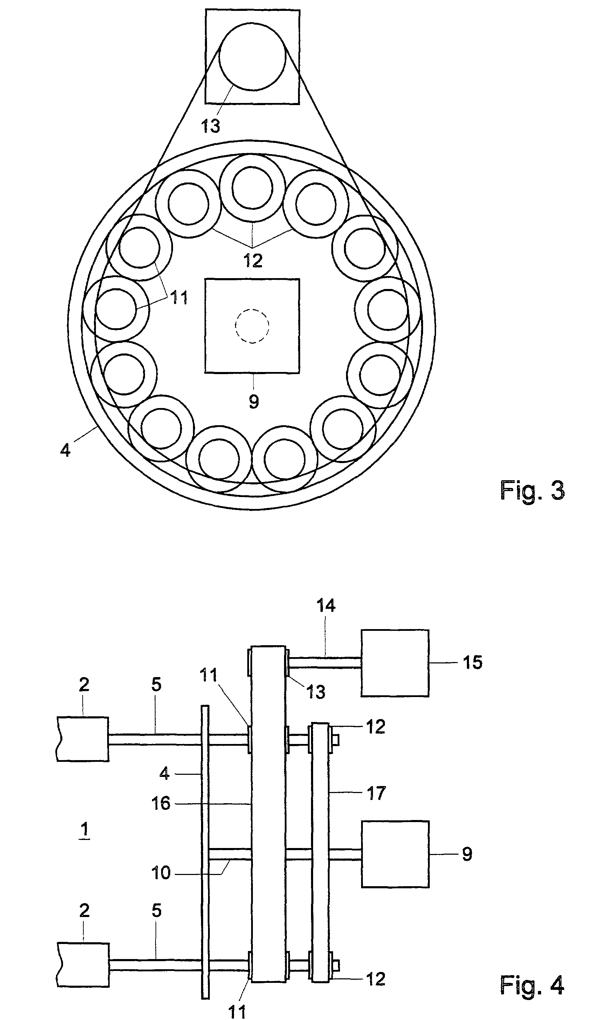

Fig. 3 is a view of the rear end face of the apparatus according to the invention; and
Fig. 4 is a longitudinal cross-section through the rear part of the apparatus according to the invention.

In the Figures corresponding parts are indicated by the same reference numerals.

The Figures show a drum structure 1 which is set up by a plurality of mutually parallel brush-shaped elements 2. These brush-shaped elements are journalled at and near their ends in flange-shaped elements 3 and 4, respectively. They therefore extend from the flange-shaped element 3 to a distance from the flange-shaped element 4. The brush-shaped elements 2 are formed by shafts 5 having substantially radially directed bristles, preferably of a synthetic material, such as abralon (registered trademark) 6.12k46. The ends of the parts of two adjacent brush-shaped elements directed towards each other touch or practically touch each other. The drum structure set up by the brush-shaped elements 2 therefore forms a closed whole. Conversely, the part of the drum structure near the flange-shaped element 4 shows open spaces between the shafts 5. These spaces are for discharging cleaned mussels. Located under these spaces is a conveying element 6 for collecting and discharging the mussels fallen between the shafts 5. The drum structure 1 is driven from the side where the flange-shaped element 4 is located; this flange-shaped element is designed as a closed plate. Conversely, the flange-shaped element 3 is provided with an inlet opening 7 for mussels to be cleaned. Through this inlet opening 7 projects a chute 8 via which mussels to be cleaned can be introduced into the drum structure 1.

The flange-shaped elements 3 and 4 are rotatably supported on a supporting frame, not shown, by means of rollers. Resting on these rollers, the drum structure 1 can be driven by a motor 9 with a controllable speed, of which motor the driven shaft 10 is fixedly mounted on the flange-shaped element 4. In order to drive the brush-shaped elements 3 around their own shafts 5, each of these shafts 5 is rotatably journalled in the flange-shaped elements 3 and 4 and is provided at the end projecting through the flange-shaped elements 4 with two pulleys or toothed wheels 11 and 12. Passed over the pulleys or toothed wheels 11 of a plurality of shafts 5 and a pulley or toothed wheel 13 around the driven shaft 14 of a motor 15 is a transmission element 16, such as a driving belt, rope or chain. In order to ensure that all the brush-shaped elements 2 rotate synchronously, a further transmission element 17, such as a driving belt, rope or chain, is passed around the pulleys or toothed wheels 12.

Through the free space in the drum structure 1 is further arranged, via the inlet opening 7, a water supply pipe 18. On one side, this supply pipe 18 is mounted on the supporting frame of the drum structure, and on the other side, this supply pipe rests in a case which is connected with the tip of the end of the driven shaft 10 projecting through the flange-shaped element 4. The supply pipe 18 is provided with openings for spraying mussels present in the drum structure.

Furthermore, lifting means are provided in the form of a, in this exemplary embodiment hydraulic, cylinder to enable the adjustment of the position of the drum structure. These lifting means, not shown, engage the supporting frame of the drum structure 1. Finally, it is stated that plate-shaped protective means 19 may be provided around the drum structure and the driving means.

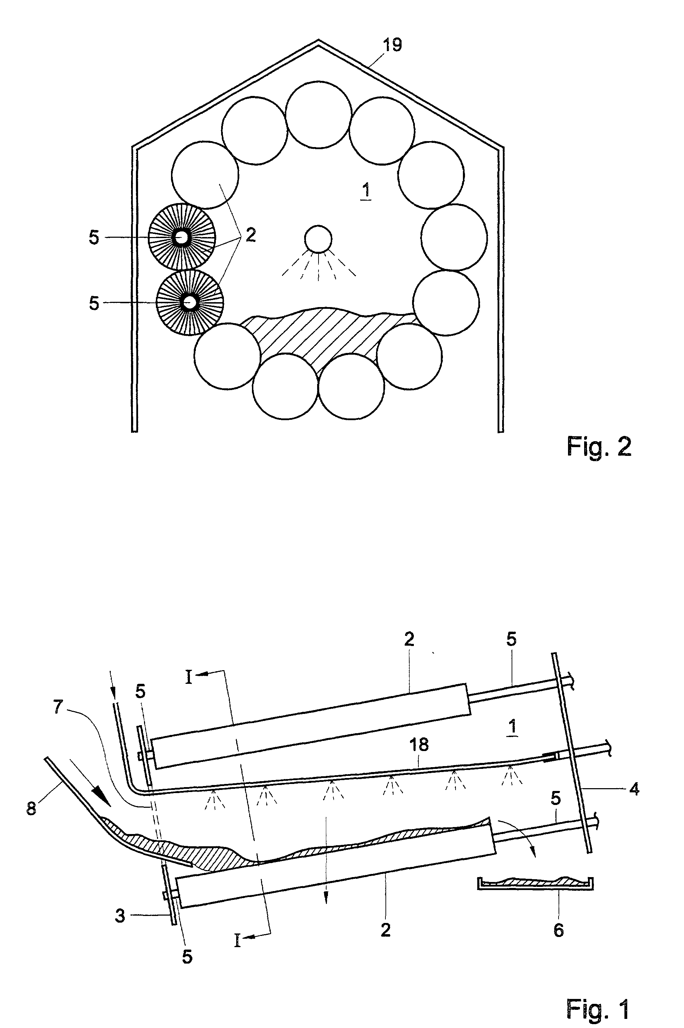

The operation of the above-described apparatus is as follows. First of all, the drum structure 1 is brought into an inclined position by means of the above lifting means, that is in a position as shown in Fig. 1, which inclined position takes place at an angle of 3 to 12°, and preferably of 6 to 8°. Subsequently, the drum structure 1 and the brush-shaped elements 2 are set in movement to a rotational speed for the drum structure 1 in the interval of 30 to 40 revolutions per minute and for the brush-shaped elements 2 to a rotational speed in the interval of 300 to 400 revolutions per minute. The correct speeds will depend on, inter alia, the degree of fouling of the mussels. The mussels are rinsed with water via the chute 8 in and through the drum structure and then, at the back of the drum structure, discharged via the spaces between the shafts 5 and the conveying element 6. At the same time, they are sprayed via the openings in the water supply pipe 18. The water runs between the brush-shaped elements 2 to the ground or to water discharge means. The throughput speed of the mussels is substantially determined by the adjustment, on the basis of the size and the degree of fouling of the mussel supplies, of the inclined position of the drum structure and by the amount of water and the size of the pressure of the water used for spraying the mussels in and through the drum structure.

The invention is not limited to the exemplary embodiment described herein with reference to the drawings, but comprises all kinds of modifications thereof, of course as far as falling within the scope of protection of the appended claims.

## Claims

1. A method for cleaning mussel shells, in particular for removing barnacles and/or cement layer therefrom, which comprises subjecting the mussels to an abrasive or brushing treatment in a rotating drum structure (1) set up by brush-shaped elements (2) likewise rotating about their axes (5).

2. A method according to claim 1, **characterised in that** the mussels to be cleaned are rinsed in and through the drum structure (1) in an upwardly inclined direction under water pressure.

3. A method according to claim 2, **characterised in that** the desired throughput speed of the mussels is obtained by the adjustment, on the basis of the size and the degree of fouling of the mussel supplies, of the inclined position of the drum structure (1) and the amount of water used for rinsing the mussels in and through the drum structure (1).

4. A method according to claim 3, **characterised in that** the inclined position takes place at an angle of 3 to 12°, but preferably of 6 to 8°.

5. A method according to any one of the preceding claims, **characterised in that** the rotational speed of the brush-shaped elements (2) is in the interval of 300 to 400 revolutions per minute.

6. A method according to any one of the preceding claims, **characterised in that** the rotational speed of the drum structure (1) is in the interval of 30 to 40 revolutions per minute.

7. An apparatus for cleaning mussel shells, in particular for removing barnacles and/or cement layer therefrom, comprising a plurality of mutually parallel brush-shaped elements (2) which together set up a drum structure (1), and which are journalled at or near their ends in flange-shaped elements (3, 4), while, furthermore, first driving means are provided for mutually synchronously driving the brush-shaped elements (2), as well as second driving means for driving the whole drum structure with flange-shaped elements (3, 4).

8. An apparatus according to claim 7, **characterised in that** the first driving means are formed by a first transmission element (16) to enable a mutually synchronous movement of the brush-shaped elements and by a first motor with a controllable speed and a second transmission element for driving one or more brush-shaped elements.

9. An apparatus according to claim 7 or 8, **characterised in that** the second driving means are formed by a second motor with a controllable speed engaging one of the flange-shaped elements (3, 4).

10. An apparatus according to any one of claims 7-9, **characterised in that** the brush-shaped elements (2) are formed by shafts having substantially radially directed bristles, while the ends of the parts of two adjacent brush-shaped elements (2) directed towards each other touch or practically touch each other.

11. An apparatus according to any one of claims 7-10, **characterised in that** one of the flange-shaped elements (3) is provided with an inlet opening (7), the brush-shaped elements (2) extend from this flange-shaped element (3) to a distance from the other flange-shaped element (4), and outlet openings are formed by the spaces between the shafts (5) of the brush-shaped elements (2) near the other flange-shaped element (4).

12. An apparatus according to claim 11, **characterised in that** a conveying element (6) for mussels to be cleaned in the drum structure is arranged under the outlet openings.

13. An apparatus according to any one of claims 7-12, **characterised in that** a water supply pipe (18) with openings for spraying mussels present in the drum structure (1) is arranged through the free space in the drum structure (1).

14. An apparatus according to any one of claims 7-13, **characterised in that** lifting means are provided for placing the drum structure (1) into the operating position at such an angle that the inlet opening (7) forms the lowermost part.

15. An apparatus according to any one of claims 7-14, **characterised in that** a chute (8) passing through the inlet opening (7) is provided, via which chute (8) mussels can be rinsed in and through the drum structure (1) under water pressure.

## Patentansprüche

1. Verfahren zum Reinigen von Muschelschalen, insbesondere zum Entfernen von Rankenfüßern und/oder Zementschichten von den Muschelschalen, das eine Schleif- oder Bürstbehandlung der Muscheln In einer Drehtrommelkonstruktion (1) umfasst, die aus bürstenförmigen Elementen (2) besteht, die sich in gleicher Weise um ihre Achsen (5) drehen.

2. Verfahren nach Anspruch 1, **dadurch gekennzeichnet, dass** die zu reinigenden Muscheln in der und durch die Trommelkonstruktion (1) in einer nach oben schrägen Richtung unter Wasserdruck gespült werden.

3. Verfahren nach Anspruch 2, **dadurch gekennzeichnet, dass** die gewünschte Durchsatzgeschwindigkeit der Muscheln durch die Einstellung der Schrägstellung der Trommelkonstruktion (1) und der zum Spülen der Muscheln in der und durch die Trommelkonstruktion (1) verwendeten Wassermenge aufgrund der Größe und des Ausmaßes des Bewuchses der Muschelzufuhr erhalten wird.

4. Verfahren nach Anspruch 3, **dadurch gekennzeichnet, dass** die Schrägstellung in einem Winkel von 3 bis 12°, vorzugsweise jedoch von 6 bis 8°, erfolgt.

5. Verfahren nach einem der vorhergehenden Ansprüche, **dadurch gekennzeichnet, dass** die Drehzahl der bürstenförmigen Elemente (2) in dem Bereich von 300 bis 400 Umdrehungen je Minute liegt.

6. Verfahren nach einem der vorhergehenden Ansprüche, **dadurch gekennzeichnet, dass** die Drehzahl der Trommelkonstruktion (1) in dem Bereich von 30 bis 40 Umdrehungen je Minute liegt.

7. Vorrichtung zum Reinigen von Muschelschalen, insbesondere zum Entfernen von Rankenfüßern und/oder Zementschichten von den Muschelschalen, mit einer Vielzahl von zueinander parallelen bürstenförmigen Elementen (2), die zusammen eine Trommelkonstruktion (1) bilden und die an oder nahe ihren Enden in flanschförmigen Elementen (3, 4) drehbar gelagert sind, wobei weiterhin erste Antriebsmittel zum miteinander synchronen Antreiben der bürstenförmigen Elemente (2) sowie zweite Antriebsmittel zum Antreiben der gesamten Trommelkonstruktion mit den flanschförmigen Elementen (3, 4) vorgesehen sind.

8. Vorrichtung nach Anspruch 7, **dadurch gekennzeichnet, dass** die ersten Antriebsmittel aus einem vorderen Getriebe-Element (16), um eine miteinander synchrone Bewegung der bürstenförmigen Elemente zu ermöglichen, und einem ersten Motor mit regelbarer Drehzahl und einem zweiten Getriebe-Element zum Antreiben eines oder mehrerer bürstenförmiger Elemente bestehen.

9. Vorrichtung nach Anspruch 7 oder 8, **dadurch gekennzeichnet, dass** die zweiten Antriebsmittel aus einem zweiten Motor mit regelbarer Drehzahl bestehen, der in eines der flanschförmigen Elemente (3, 4) eingreift.

10. Vorrichtung nach einem der Ansprüche 7 - 9, **dadurch gekennzeichnet, dass** die büratenförmigen Elemente (2) aus Wellen mit im Wesentlichen radial ausgerichteten Borsten gebildet sind, während die Enden der Teile von zwei übereinander liegenden bürstenförmigen Elementen (2), die gegeneinander gerichtet sind, einander berühren oder praktisch berühren.

11. Vorrichtung nach einem der Ansprüche 7 - 10, **dadurch gekennzeichnet, dass** eines der flanschförmigen Elemente (3) mit einer Einlassöffnung (7) versehen ist, dass die bürstenförmigen Elemente (2) von diesem flanschförmigen Element (3) in einem Abstand von dem anderen flanschförmigen Element (4) verlaufen und dass Auslassöffnungen von den Zwischenräumen zwischen den Wellen (5) der bürstenförmigen Elemente (2) nahe dem anderen flanschförmigen Element (4) gebildet werden.

12. Vorrichtung nach Anspruch 11, **dadurch gekennzeichnet, dass** unter den Auslassöffnungen ein Transportelement (6) für in der Trommelkonstruktion zu reinigende Muscheln angeordnet ist.

13. Vorrichtung nach einem der Ansprüche 7 - 12, **dadurch gekennzeichnet, dass** eine Wasserversorgungsieltung (18) mit Öffnungen zum Besprühen der in der Trommelkonstruktion (1) befindlichen Muschein durch den freien Raum in der Trommelkonstruktion (1) angeordnet ist

14. Vorrichtung nach einem der Ansprüche 7 - 13, **dadurch gekennzeichnet, dass** Hebemittel vorgesehen sind, um die Trommeikonstruktion (1) in einem solchen Winkel, dass die Einlassöffnung (7) den untersten Teil bildet, in die Betriebsstellung zu bringen.

15. Vorrichtung nach einem der Ansprüche 7 - 14, **dadurch gekennzeichnet, dass** eine durch die Einlassöffnung (7) führende Rutsche (8) vorgesehen ist, über die Muschelschalen in der und durch die Trommelkonstruktion (1) unter Wasserdruck gespült werden können.

## Revendications

1. Procédé destiné à nettoyer des coquilles de moules, en particulier destiné à enlever les balanes et/ou leur couche de cément, lequel comprend la soumission des moules à un traitement abrasif ou de brossage dans une structure de tambour tournant (1) constituée d'éléments en forme de brosses (2) tournant également autour de leurs axes (5).

2. Procédé selon la revendication 1, **caractérisé en ce que** les moules devant être nettoyées sont rincées dans et à travers la structure de tambour (1) dans une direction inclinée vers le haut sous une pression d'eau.

3. Procédé selon la revendication 2, **caractérisé en ce que** la vitesse de débit désiré des moules est obtenue par le réglage, sur la base de la taille et du degré de salissure des stocks de moules, de la position inclinée de la structure de tambour (1) et de la quantité d'eau utilisée pour rincer les moules dans et à travers la structure de tambour (1).

4. procédé selon la revendication 3, **caractérisé en ce que** la position inclinée a lieu à un angle de 3 à 12°, mais de préférence de 6 à 8°.

5. Procédé selon l'une quelconque des revendications précédentes, **caractérisé en ce que** la vitesse de rotation des éléments en forme de brosse (2) se situe dans l'intervalle de 300 à 400 tours par minute.

6. Procédé selon l'une quelconque des revendications précédentes, **caractérisé en ce que** la vitesse de rotation de la structure de tambour (1) se trouve dans l'intervalle de 30 à 40 tours par minute.

7. Dispositif destiné à nettoyer les coquilles de moules en particulier destiné à enlever des balanes et/ou leur couche de cément, comprenant une pluralité d'éléments en forme de brosse mutuellement parallèles (2) qui constituent ensemble une structure de tambour (1), et qui sont tourillonnés au niveau de leurs extrémités ou à proximité de celles-ci dans des éléments en forme de flasque (3, 4), tandis qu'en outre des premiers moyens d'entraînement sont prévus pour entraîner mutuellement de façon synchrone les éléments en forme de brosse (2), ainsi que des seconds moyens d'entraînement destinés à entraîner la structure de tambour entière avec les éléments en forme de flasque (3, 4).

8. Dispositif selon la revendication 7, **caractérisé en ce que** les premiers moyens d'entraînement sont formés par un premier élément de transmission (16) pour permettre un déplacement mutuellement synchrone des éléments en forme de brosse et par un premier moteur présentant une vitesse pouvant être commandée et un second élément de transmission destiné à entraîner un ou plusieurs éléments en forme de brosse.

9. Dispositif selon la revendication 7 ou 8, **caractérisé en ce que** les seconds moyens d'entraînement sont formés par un second moteur présentant une vitesse pouvant être commandée s'engageant avec l'un des éléments en forme de flasque (3, 4).

10. Dispositif selon l'une quelconque des revendications 7 à 9, **caractérisé en ce que** les éléments en forme de brosse (2) sont formés par des axes présentant des poils dirigés pratiquement radialement, tandis que les extrémités des parties des deux éléments en forme de brosse adjacents (2) dirigés l'un vers l'autre se touchent ou se touchent pratiquement,

11. Dispositif selon l'une quelconque des revendications 7 à 10, **caractérisé en ce que** l'un des éléments en forme de flasque (3) est muni d'une ouverture d'entrée (7), les éléments en forme de brosse (2) s'étendent depuis cet élément en forme de flasque (3) sur une certaine distance par rapport à l'autre élément en forme de flasque (4), et des ouvertures de sortie sont formées par les espaces entre les axes (5) des éléments en forme de brosse (2) à proximité de l'autre élément en forme de flasque (4).

12. Dispositif selon la revendication 11, **caractérisé en ce qu'**un élément de transport (6) destiné aux moules devant être nettoyées dans la structure de tambour, est agencé sous les ouvertures de sortie.

13. Dispositif selon l'une quelconque des revendications 7 à 12, **caractérisé en ce qu'**un tuyau d'alimentation en eau (18) comportant des ouvertures destinées à pulvériser les moules présentes dans la structure de tambour (1) est agencé à travers l'espace libre dans la structure de tambour (1).

14. Dispositif selon l'une quelconque des revendications 7 à 13, **caractérisé en ce que** des moyens de levage sont prévus pour positionner la structure de tambour (1) dans la position de fonctionnement à un angle tel que l'ouverture d'entrée (7) forme la partie la plus basse.

15. Dispositif selon l'une quelconque des revendications 7 à 14, **caractérisé en ce qu'**un plan incliné (8) passant à travers l'ouverture d'entrée (7) est prévu, par l'intermédiaire duquel plan incliné (8) les moules peuvent être rincées dans et à travers la structure de tambour (1) sous une pression d'eau.
